# EUROPEAN PATENT SPECIFICATION

(11) **EP 0 798 196 B1**
(45) Date of publication and mention of the grant of the patent: **06.02.2002**
(21) Application number: 97109840.5
(22) Date of filing: 01.09.1994
(51) Int. Cl.: B62D 11/10, F16H 7/12, F16H 7/08, A01F 12/44

(54) **Working vehicle**
Arbeitsfahrzeug
Véhicule de travail

(30) Priority: 09.09.1993 JP 22481093; 08.12.1993 JP 34089993; 03.09.1993 JP 24396893
(43) Date of publication of application: 01.10.1997
(62) Divisional of application: 94113690.5
(73) Proprietor: YANMAR AGRICULTURAL EQUIPMENT Co., Ltd., Osaka 530 (JP)
(72) Inventor: Hamada, Kenji, 1-32, Chayamachi, Kita-ku, Osaka 530 (JP); Kirihata, Toshinori, 1-32, Chayamachi, Kita-ku, Osaka 530 (JP); Nakamura, Masami, 1-32, Chayamachi, Kita-ku, Osaka 530 (JP); Kamikubo, Keita, 1-32, Chayamachi, Kita-ku, Osaka 530 (JP); Takagi, Mikio, Okayama-shi, Okayama 702 (JP); Kawasaki, Koichi, Okayama-shi, Okayama 702 (JP)
(74) Representative: Görg, Klaus, Dipl.-Ing.

(56) References cited:
- DE-U- 8 221 573
- GB-A- 2 224 423
- PATENT ABSTRACTS OF JAPAN vol. 017, no. 517 (M-1481), 17 September 1993 -& JP 05 133444 A (KUBOTA CORP), 28 May 1993,
- PATENT ABSTRACTS OF JAPAN vol. 010, no. 286 (M-521), 27 September 1986 -& JP 61 103047 A (MAKINO MILLING MACH CO LTD), 21 May 1986,
- PATENT ABSTRACTS OF JAPAN vol. 014, no. 480 (C-0771), 19 October 1990 -& JP 02 200113 A (KUBOTA LTD), 8 August 1990,
- PATENT ABSTRACTS OF JAPAN vol. 013, no. 278 (C-611), 26 June 1989 -& JP 01 074933 A (KUBOTA LTD), 20 March 1989,
- PATENT ABSTRACTS OF JAPAN vol. 016, no. 183 (C-0936), 6 May 1992 -& JP 04 023919 A (ISEKI & CO LTD), 28 January 1992,

## Description

This invention relates to working vehicle such as a combine and the like. Such a combine may have a crawler respectively on the left and the right sides, an operating section, driving means with a belt and a hulling machine with a grain sorting device.

In combines, left and right crawlers are respectively driven by left and right hydrostatic transmission device (hereinafter abbreviated to HST) and so operation is conducted by using two independent left and right operating levers linked to each trunnion lever of HST.

In a conventional hulling machine driving system, a tension roller clutch for applying tension on the belt with a lever to transmit engine's driving power to a hulling section is used as a clutch of the hulling section. However, in such a tension roller clutch, because the lever for switching the clutch is linked to a clutch arm with a wire, the operating system inevitably becomes much more complex especially when the clutch of this type is used in a large agricultural machine such as a combine. From this standpoint, it seems better to use a clutch motor in place of the aforementioned lever to switch the tension roller clutch. However, when the clutch motor is used in high speed, a large impact tends to be applied on belt and when it is used in slow speed, maneuverability tends to be poor.

In the prior art document JP-A-05 133 444 and the accompanying Patent Abstracts of Japan, Vol. 017, No. 517 (M-1481) a belt variable transmission device to be favorably used in a combine is shown. The power of an engine is inputted into a transmission via said belt variable speed transmission device. This device has a driving pulley formed into a split pulley structure in place of a high speed transmission. A belt driving mechanism with a main clutch is installed over the engine and the belt variable transmission device. The driving pulley is expanded or contracted by a cam mechanism. For disengaging the main clutch an electric motor is provided. A brake and the electric motor are interlockingly connected to each other to operate the brake installed in the transmission to carry out a engaging or disengaging operation of the main clutch. However, a controlling means controlling the action of the tension roller clutch and the operating mechanism for this controlling means are not disclosed.

A working vehicle according to the invention comprises an engine mounted on a machine floor, a tension roller clutch provided generally in the middle point of a belt for transmitting the driving force of said engine to a working section, a clutch member for said tension roller clutch and a control means that makes the action of said tension roller clutch caused by the input of said clutch member fast until said tension roller clutch touches said belt and makes said action gradually slow after said tension roller clutch touches said belt.

By this device, maneuverability is improved and a tension suddenly applied on the belt by sudden switching-on of the clutch member, especially a clutch motor, can be avoided and thereby incident of its breaking can be minimized to prolong the life of the belt.

Other features and advantages of this invention will be apparent from the following description taken in connection with the accompanying drawing wherein:
- Fig. 1: is a side view of the combine.
- Fig. 2: is a plan of the combine.
- Fig. 3: is a rear view of driving system for hulling machine.
- Fig. 4: is a cross-sectional view of an engine section.
- Fig. 5: is a rear view of a clutch section.
- Fig. 6: is a side view of the clutch section.
- Fig. 7: is a plan of the clutch section.
- Fig. 8: is a partially enlarged rear view of the clutch section.
- Fig. 9: is an illustration showing the whole engine driving system

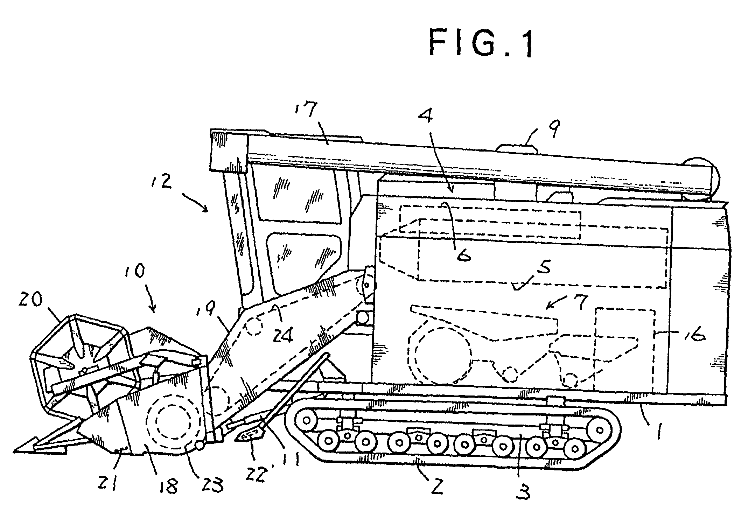

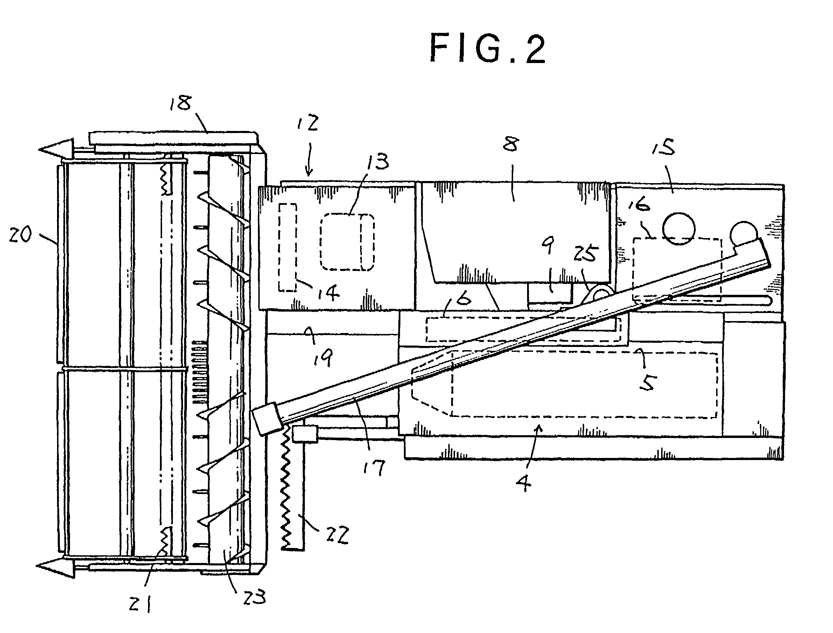

This invention will be described in more detail according to the attached drawing. In Figs. 1 and 2, vehicle floor 1 is mounted on frame 3 which supports a couple of crawlers 2 on the left and the right sides of the combine. A hulling machine 4 provided with a screw type cylinder 5, a treating drum 6 and a grain sorter 7 is mounted on the vehicle floor 1. Grain tank 8 is designed to hold grains taking out from the hulling machine 4 by way of grain lifting pipe 9. Reaper 10 is designed to move up and down by means of hydraulic pressure cylinder 11 located below in front of the hulling machine 4. Operators' cabin 12 provided with their seat 13 and an operation panel 14 is located before the grain tank 8. Engine cover 15 enclosing engine 16 is located behind the grain tank 8. Auger 17 is for taking out grains in the grain tank 8.

The reaper 10 is provided with a couple of headers 18 to push their front end into yet unreaped plants and feeder house 19 is located behind the middle of the two headers to feed reaped plants to the hulling machine 4. Provided between the headers 18 are reel 20 for taking in unreaped plants, first blade 21 and second blade 22, each capable of alternating motion and auger 23 for taking in reaped plants. Reaped plants taken from the headers 18 is carried to the hulling machine 4 by means of chain conveyer 24 inside the feeder house 19.

Provided to on the right side of the hulling machine is second returning pipe 25 to get yet unhulled grains back to the hulling machine 4 through the treating drum 6 in order to get them rehulled and resorted.

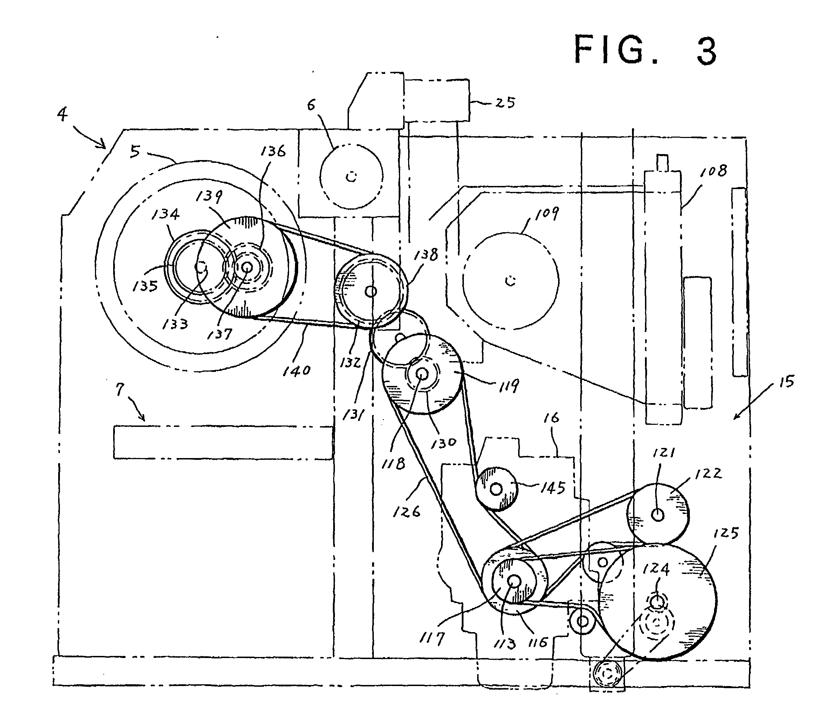

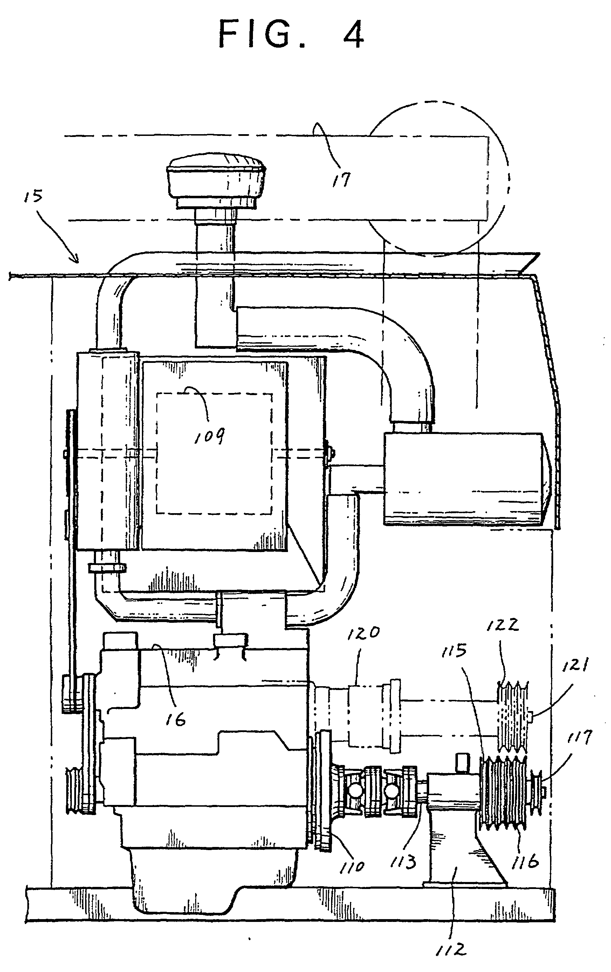

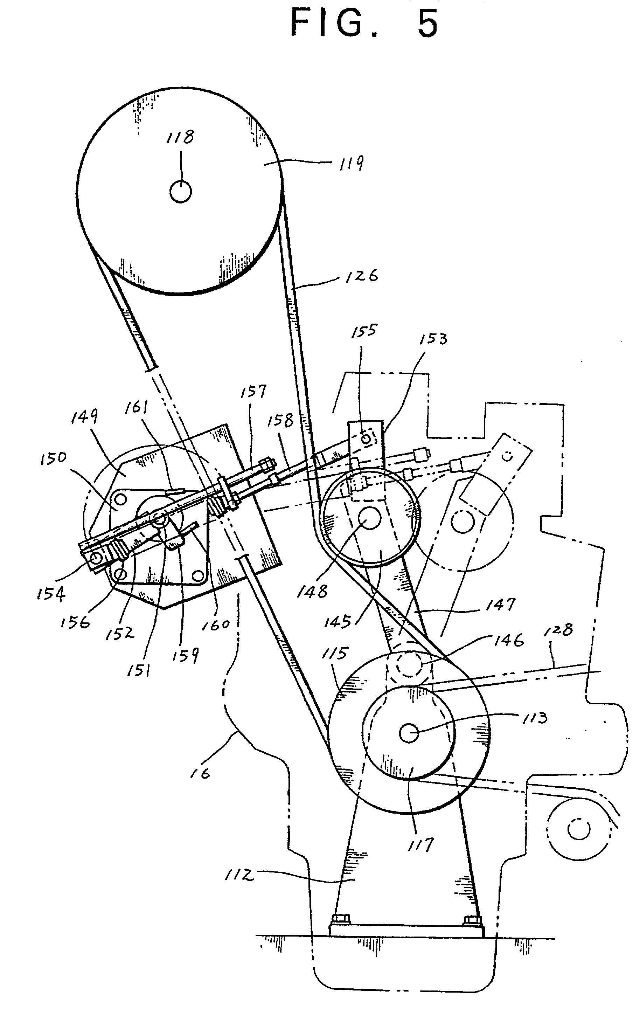

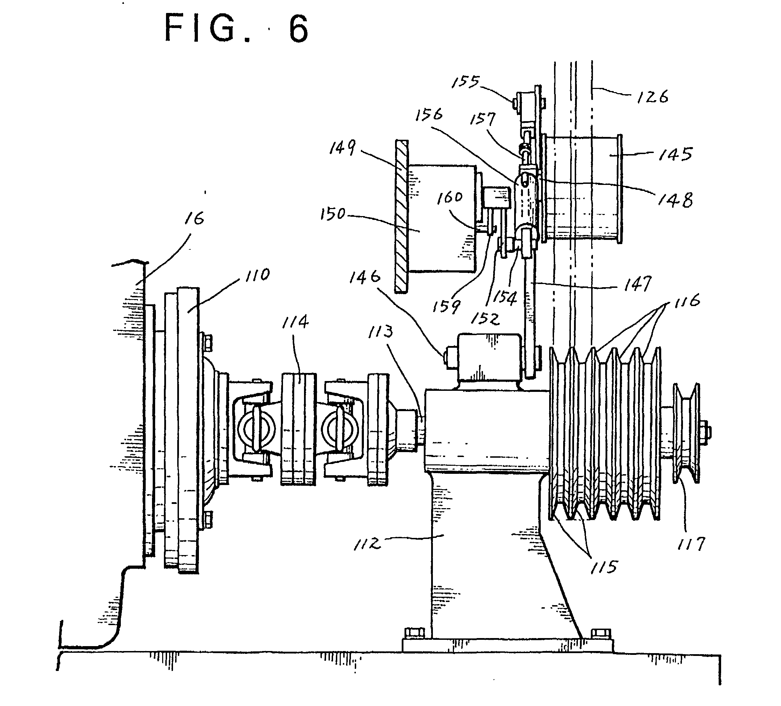

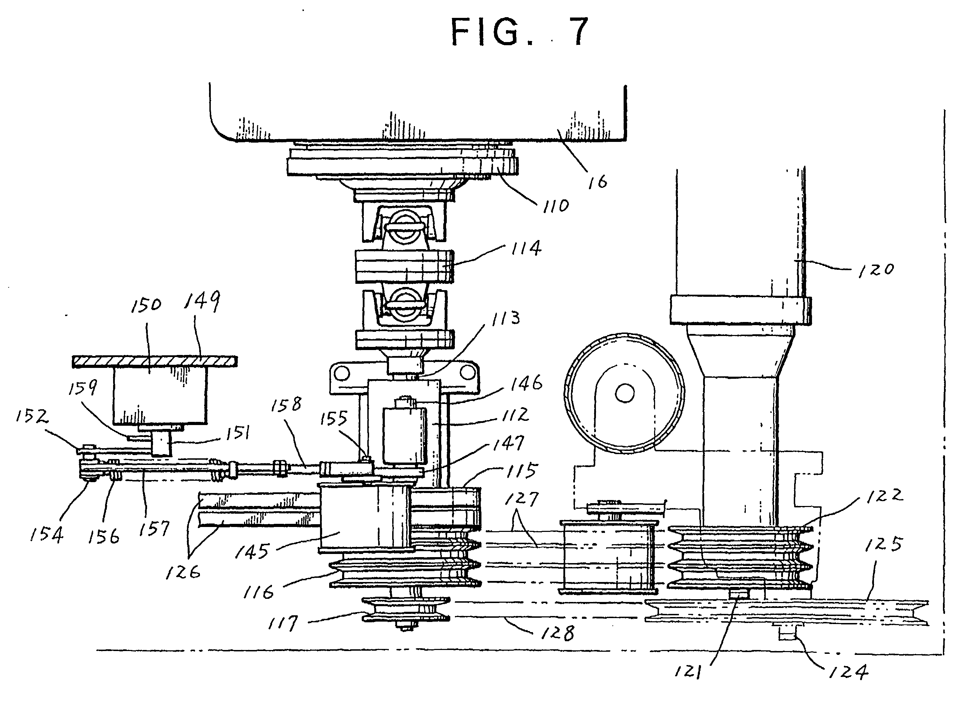

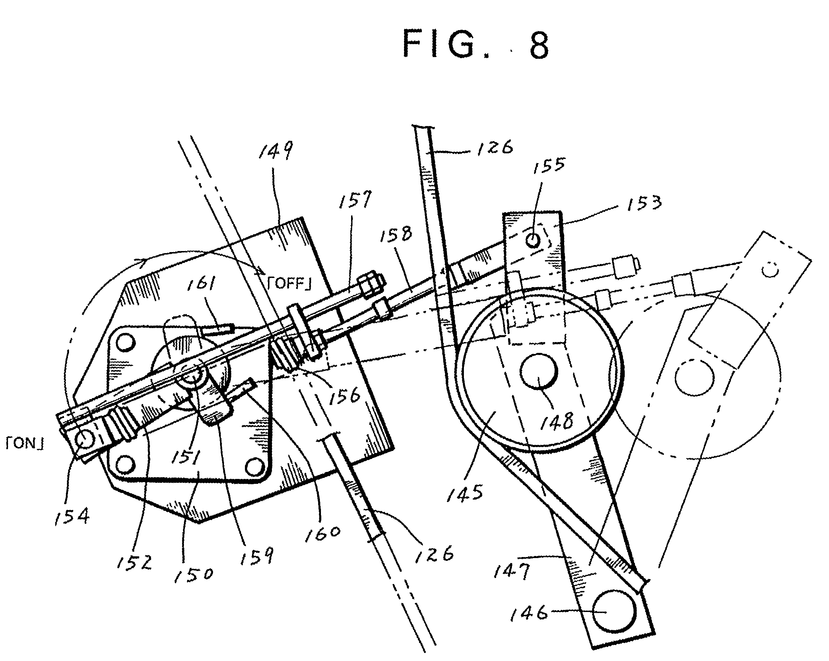

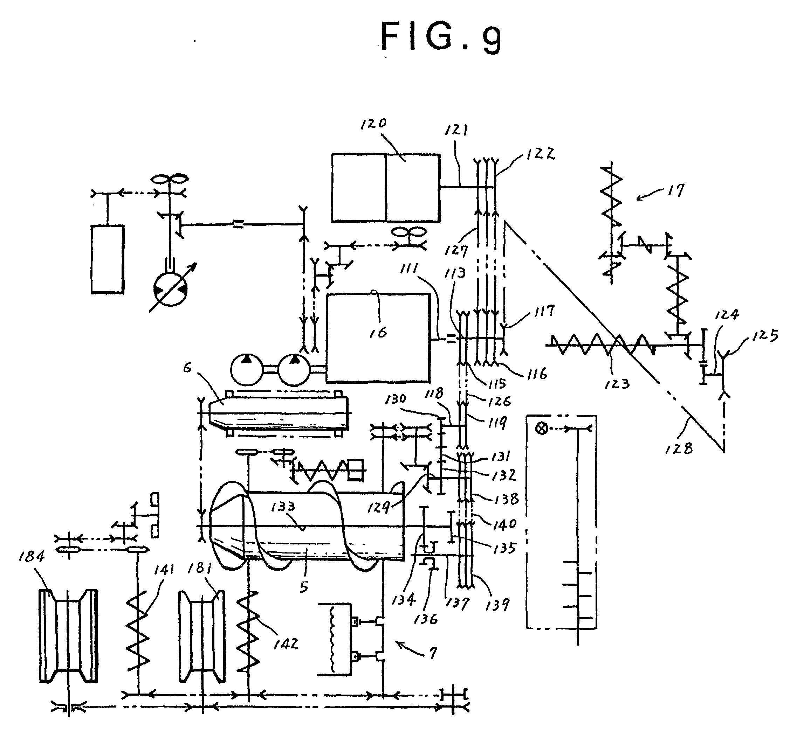

A working vehicle according to the invention, here a combine, is shown in Figs. 3 to 9. The combine comprises an engine 16 for driving the hulling machine 4, and a radiator 108 for cooling the engine and a sirocco fan 109 for cooling the radiator 108. These elements are arranged separately above and below in the hulling section. An output shaft 111 on a flywheel 110 side of the engine 16 is connected to a counter shaft 113 supported by a shaft bearing 112 on the right side of the engine 16 by using an adjustable joint 114. Pulleys 115, 116, 117, each fixed to the counter shaft 113, are respectively connected to an input pulley 119 of the hulling machine's shaft 118, an input pulley 122 of HST's shaft 121 and an input pulley 125 of an input shaft 124 for driving an auger 123 by using transmission belts 126, 127 and 128 in order to drive the hulling machine 4, the crawlers 2 and the grain tank 8.

The hulling machine shaft 118 and the hulling machine counter shaft 129 are connected to each other by using reduction gears 130, 131 and 132. The hulling machine counter shaft 129 is connected to a gearbox shaft 137 by using pulleys 138, 139 and belt 140, where the gearbox shaft 137 is connected to the cylinder shaft 133 with two stage speed change gears 134, 135 and switching gear 136, by which the cylinder 5 can be rotated in two high/low different speed. Meanwhile, 141 and 142 denote first and second conveyers of the hulling machine 4, 184 denotes grain fan and 181 denotes prefan or an auxiliary fan of the grain fan 184.

Additionally, a tension roller clutch 145 is provided to on the transmission belt 126 connecting the counter shaft 113 and the hulling machine shaft 118, where the tension roller 145, which can be mounted on or dismounted from the belt 126, is held by a roller bearing shaft 148 on one upper end of a tension arm 147 of which the other lower end is pivotally fixed to a bearing shaft 146 on the top of the bearing shaft base 112. On the other side of the belt 126 on which tension is applied by the tension roller clutch 145, there is an electric clutch motor 150 pivotally mounted on a plate 149. A shaft 154 on the top of a rotating arm 152 fixed to a motor shaft 151 and the shaft 155 on the top of a plate 153 unmovably fixed to on the top of the tension roller clutch 145 are connected to each other to jointly move by using tension spring 156 and connecting rod 158 provided with guide rod 157. By this device, the tension roller clutch can be mounted on or dismounted from the belt 126 by turning the motor in right or reverse direction.

The connecting rod 158 which is laid in line with the tension spring 156 between the two shafts 154 and 155 is provided so that it comes to be generally in line with the rotating arm 152 when the tension roller clutch 145 is put on. In this device in order to prolong the belt's life, speed of the tension roller clutch from its touching the belt to its showing the maximum tension is designed to gradually slow down and action in response to on/off of the clutch is also designed to take place after a certain time interval.

The motor shaft 151 is provided with a butting piece 159 so that the piece is butted against stoppers 160, 161 mounted on the clutch motor 150 when the tension roller clutch is switched on or off, whereby the motor's position is limited. More specifically, the piece 159 is butted against the stopper 160 so that the spring 156 and the connecting rod 158 can maintain their position over the fulcrum of the motor shaft 151 when the tension roller clutch is switched on. Also the piece 159 is butted against the stopper 160 so that they can maintain their position when one side of the belt 126 to which the tension roller clutch 145 is touched is so tensed as to get the tension arm 147 back to the off-position and another side of the belt 126 is slackened by the engine stop (this gives the cylinder 5 inertia rotation), for example, while the tension roller clutch is being switched on, whereby their position is prevented from turning over the limited range.

As described above, compared to the conventional means in which the tension roller clutch and clutch lever are connected with wire to operate, this new system, in which the on/off switching of the tension roller clutch is conducted by the clutch motor 150, can simplify the structure of the operation section, widely reduce manipulating power and make the tension roller clutch conduct exact on/off switching.

Also in this case, abrupt on/off switching of the tension roller clutch 145 is avoided by putting a certain time interval before that switching by using the motor. That is, when the roller clutch is switched on, action before the belt is tensed by the tension roller clutch can be made gradually slow down by the semi-circle movement of the rotating arm 152,in this way, the sudden clutch impact on the belt 126 is avoided and the belt is prevented from breaking, whereby the life of the belt can be prolonged.

## Claims

1. Working vehicle, comprising an engine (16) mounted on a machine floor, a tension roller clutch (145) provided generally in the middle point of a belt (126) for transmitting the driving force of said engine (16) to a working section, a clutch member (150) for said tension roller clutch (145) and a control means that makes the action of said tension roller clutch (145) caused by the input of said clutch member (150) fast until said tension roller clutch touches said belt and makes said action gradually slow after said tension roller clutch touches said belt.

2. Working vehicle as claimed in claim 1, wherein a hulling machine (4) provided with a cylinder (5) and a grain sorter (7) is mounted on the vehicle floor (1) and thereby substantially forms a combine to crop grains.

3. Working vehicle as claimed in claim 1, wherein said clutch member is an electric motor.

## Patentansprüche

1. Arbeitskraftfahrzeug mit einem Motor (16), der auf einem Maschinenboden angebracht ist, einem Zugrollengesperre (145), das im allgemeinen in dem mittleren Punkt eines Riemens (126) vorgesehen ist zum Übertragen der Antriebskraft des Motors (16) auf einen Arbeitsabschnitt, einem Kupplungsteil (150) für das Zugrollengesperre (145) und einem Steuermittel, das die Aktion des Zugrollengesperres (145), bewirkt durch die Eingabe des Kupplungsteils (150), schnell macht bis das Zugrollengesperre den Riemen berührt, und die Aktion allmählich langsam macht, nachdem das Zugrollengesperre den Riemen berührt hat.

2. Arbeitsfahrzeug nach Anspruch 1, wobei eine Schälmaschine (4), die mit einem Zylinder (5) und einem Getreidesortierer vorgesehen ist, an dem Fahrzeugboden (1) angebracht ist und dabei im wesentlichen einen Mähdräscher bildet, um Getreide zu mähen.

3. Arbeitsfahrzeug nach Anspruch 1, wobei das Kupplungsteil ein elektrischer Motor ist.

## Revendications

1. Véhicule de travail, comprenant un moteur (16) monté sur un sol de machine, un embrayage de galet tendeur (145) prévu en général au niveau du point milieu d'une courroie (126) pour transmettre la force d'entraînement dudit moteur (16) à une section de travail, un élément d'embrayage (150) pour ledit embrayage de rouleau tendeur (145) et un moyen de commande qui rend rapide l'action dudit embrayage de rouleau tendeur (145) par l'entrée dudit élément d'embrayage (150) jusqu'à ce que ledit embrayage de rouleau tendeur touche ladite courroie et rend ladite action progressivement lente après que ledit embrayage de rouleau tendeur ait touché ladite courroie.

2. Véhicule de travail selon la revendication 1, dans lequel une machine à écosser (4) munie d'un cylindre (5) et d'un trieur de grain (7) est montée sur le sol du véhicule (1) et forme ainsi essentiellement une combinée pour récolter les grains.

3. Véhicule de travail selon la revendication 1, dans lequel ledit élément d'embrayage est un moteur électrique.
